# DEMANDE DE BREVET EUROPEEN

(11) **EP 0 908 999 A1**
(43) Date de publication de la demande: **14.04.1999**
(21) Numéro de dépôt: 98440191.9
(22) Date de dépôt: 02.09.1998
(51) Int. Cl.: H02H 7/093

(54) **Actionneur pas-à-pas à détection de blocage**

(30) Priorité: 16.09.1997 FR 9711667
(71) Demandeur: EATON S.A.M., MC-98000 Monaco (MC)
(72) Inventeur: Zeraffa, Philippe, 06800 Cagnes-sur-Mer (FR); Armiroli, Jean, 06310 Beaulieu-sur-Mer (FR); Corbier, Jean-Paul, 06240 Beausoleil (FR)
(74) Mandataire: Littolff, Denis

(57) **Abrégé**

Actionneur rotatif (1) à moteur pas-à-pas à détection de blocage, relié à une unité centrale de commande lui envoyant des consignes de positionnement, comportant un circuit électronique (8) permettant d'une part la commande des pas du moteur et d'autre part la communication avec ladite unité centrale, caractérisé en ce qu'il comprend des moyens de détection (5, 6) du blocage ou du glissement dudit moteur pas-à-pas, reliés à un circuit électronique de traitement comprenant d'une part un bloc électronique (12) de séquencement des pas du moteur et de gestion du signal de rotation issu desdits moyens de détection (5, 6), pour arrêter la rotation du moteur lorsqu'un problème est détecté, et d'autre part un circuit électronique (11) de gestion de la communication envoyant un signal de diagnostic à l'unité centrale de commande.

## Description

La présente invention concerne un actionneur rotatif à moteur pas-à-pas relié à une unité centrale de commande lui envoyant des consignes de positionnement, et comportant un circuit électronique permettant d'une part la commande des pas du moteur, et d'autre part la communication avec ladite unité centrale.

L'invention a notamment été conçue pour des systèmes de climatisation appliqués au domaine de l'automobile, pour déplacer des volets d'air dans une centrale de climatisation de véhicule. Dans la suite, pour simplifier la description, on s'en tiendra à cet exemple, bien qu'un tel actionneur puisse également servir dans d'autres contextes techniques.

Pour l'application à l'automobile, un actionneur classique comporte un moteur pas-à-pas avec un train réducteur à engrenages, un circuit électronique communiquant d'une part avec une unité centrale de commande, et assurant d'autre part la commande des pas du moteur. De préférence, la liaison entre ce circuit et l'unité centrale est multiplexée.

Cette unité centrale permet à l'utilisateur de sélectionner les paramètres de fonctionnement de la climatisation : température, ventilation, recirculation de l'air, dégivrage des vitres etc ... L'unité centrale de commande traite les informations déduites des opérations de sélection effectuées par l'opérateur et calcule les positions que doivent prendre les divers volets qui orientent les flux d'air à l'intérieur de la centrale de climatisation.

Les actionneurs associés aux volets reçoivent en fait les ordres de l'unité centrale de commande, et positionnent lesdits volets conformément aux ordres reçus.

Dans l'art antérieur, il existe non seulement des actionneurs à moteur pas-a-pas, mais également des actionneurs à moteur à courant continu, dont le principal inconvénient est qu'ils nécessitent d'être équipés d'un potentiomètre de recopie pour permettre un positionnement précis de l'organe qu'ils déplacent (par exemple un volet). Or un potentiomètre de recopie est un composant onéreux, qui plus est sujet à l'usure, ce qui ne va pas dans le sens recherché d'une durée de vie correcte des équipements, avec des performances satisfaisantes. Ils sont de plus beaucoup plus bruyants que les actionneurs pas-à-pas, et sont à ce titre de plus en plus écartés, l'exigence de silence étant au titre du confort croissante dans la conception des voitures d'aujourd'hui.

Les moteurs des actionneurs pas-à-pas reçoivent de l'unité centrale de commande le nombre précis d'impulsions nécessaires pour déplacer leur rotor du nombre de pas voulu pour atteindre la position de consigne. Il n'est donc pas nécessaire de disposer d'un composant supplémentaire du type potentiomètre de recopie.

Toutefois, ces actionneurs ne fonctionnent qu'à la condition que leur position initiale soit connue, d'où une phase de remise à zéro à la mise sous tension. Pendant cette phase, l'unité centrale fait tourner l'actionneur pendant une durée un peu supérieure à la durée strictement nécessaire pour qu'il se déplace d'une butée à l'autre, et dans un sens donné. A l'issue de cette phase, l'unité centrale connaît la position précise de l'association actionneur / volet d'air, et le fonctionnement normal peut débuter.

Les inconvénients se déduisent de l'explication précédente :
- le temps passé par l'actionneur à perdre des pas alors qu'il est déjà en butée est perdu ;
- la climatisation ne commence à fonctionner normalement qu'avec du retard ;
- le bruit généré par l'actionneur lorsqu'il arrive en butée est gênant ; et
- le blocage éventuel d'un volet d'air sous l'effet du givre, de la glace ou pour toute autre raison mécanique, est ignoré par l'unité centrale de commande, qui continue par conséquent à envoyer des ordres alors que la position initiale est perdue, entraînant un dysfonctionnement de la climatisation.

Certains au moins de ces inconvénients pourraient être supprimés par l'emploi de moyens de détection de l'arrivée en butée de l'actionneur, par exemple à l'aide de classiques détecteurs de fin de course, mais cette solution génère elle-même des inconvénients propres.

Que ces détecteurs soient des simples interrupteurs des capteurs magnétiques ou de capteurs optiques, ils doivent dans tous les cas être disposés à proximité du volet d'air à contrôler, et par suite à distance de leur actionneur associé, ce qui entraîne des surcoûts dus au montage et au câblage, et peut diminuer la fiabilité globale du système.

On pourrait également utiliser des circuits électriques spécifiques destinés à détecter le blocage d'un moteur en observant la variation de courant qui en résulte : dans le cas des petits moteurs pas-à-pas utilisés dans ce type d'actionneurs, cette variation est en fait très faible. Il serait alors difficile, voire impossible, de la différencier des variations dues à d'autres facteurs tels que le bruit électrique, la température des bobines, la température ambiante, les frottements divers, etc ...

La présente invention supprime les inconvénients précités, en permettant notamment de détecter tout blocage de l'actionneur, et également toute perte de pas ou glissement dû à une perte de synchronisme entre les ordres reçus et le mouvement de l'arbre du moteur, et d'arrêter le moteur instantanément lorsqu'un tel problème est détecté.

Un autre objectif de l'invention est de permettre la réalisation des fonctions précitées sans augmenter pour autant la complexité du câblage ou du montage de l'unité de climatisation dans le véhicule à équiper.

Un objectif encore est de retourner à l'adresse de l'unité centrale de commande un message signalant la perte de pas ou le blocage du moteur.

Il s'agit là d'une fonction de diagnostic qui peut s'avérer intéressante dès la fabrication de la centrale de climatisation, car elle autorise le contrôle de son bon fonctionnement. Ensuite, au cours du fonctionnement normal, elle permet l'identification des blocages par l'unité centrale, qui peut alors adopter des stratégies de secours adéquates.

Pour synthétiser, les caractéristiques principales de l'invention résident en ce que l'actionneur comprend des moyens de détection du blocage ou du glissement dudit moteur pas-à-pas, reliés à un circuit électronique de traitement comprenant d'une part un bloc électronique de séquencement des pas du moteur et de gestion du signal de rotation issu desdits moyens de détection, pour arrêter la rotation du moteur lorsqu'un problème est détecté, et d'autre part un circuit électronique de gestion de la communication envoyant un signal de diagnostic à l'unité centrale de commande.

Plus précisément, lesdits moyens de détection du blocage ou du glissement du moteur pas-à-pas génèrent un signal oscillant entre deux états tant que ledit moteur tourne, ledit signal étant transmis au bloc électronique de séquencement et de gestion du signal de rotation, comportant un compteur périodique dont la période est égale à la fréquence de récurrence normale dudit signal, et détectant l'occurrence de cette donnée et le changement de période du compteur pour contrôler si la rotation du moteur est normale.

Selon une configuration préférentielle, ces moyens consistent d'une part en un aimant permanent porté par un élément tournant de l'actionneur et d'autre part en un capteur de champ magnétique, positionné sur une partie fixe de l'actionneur, de telle sorte que la variation du champ magnétique produit par le mouvement de l'aimant induit un changement d'état du signal de sortie.

Au moins deux variantes s'imposent plus particulièrement pour l'installation de l'aimant permanent :
- l'élément tournant choisi est le rotor du moteur pas-à-pas ;
- l'élément tournant choisi est un pignon d'un train d'engrenages formant réducteur mécanique sur l'arbre du moteur pas-à-pas.

De préférence encore, le circuit électronique de traitement et le capteur magnétique sont dans ce cas intégrés dans un seul composant.

Le fonctionnement est le suivant :

L'aimant permanent tourne quand le moteur pas-à-pas est activé, et passe en principe régulièrement en face du capteur de champ magnétique fixe dans le boîtier de l'actionneur. Chaque fois que l'aimant passe devant le capteur magnétique, celui-ci change d'état, et son signal est reçu par le circuit électronique de traitement, l'information du changement d'état étant ensuite répercutée au bloc électronique de séquencement et de gestion du signal intégré à l'actionneur.

Ledit bloc électronique de traitement est, comme on l'a mentionné auparavant, également chargé d'appliquer les consignes reçues de l'unité centrale au circuit de commande, qui réalise la commutation des bobines du moteur pas-à-pas pour le faire tourner. Il est enfin capable d'analyser si le nombre de pas commandés entre deux impulsions en provenance du capteur magnétique a une valeur conforme au fonctionnement correct du moteur.

En cas de blocage, les bobines du moteur continuent à recevoir les impulsions de commande, mais le signal émis continûment par le capteur ne change plus d'état, ou alors à un rythme non conforme à celui qui était attendu, ce qui signifie que le moteur perd des pas.

Lorsque cette situation est analysée, de la manière expliquée plus en détail par la suite, le circuit électronique de commande cesse d'activer les bobines du moteur pas-à-pas jusqu'à ce que l'unité centrale envoie un message demandant une rotation dans l'autre sens. Le circuit électronique de traitement, s'il est distinct, envoie quant à lui un message de diagnostic signalant le problème rencontré, via le circuit de gestion de la communication.

Selon un ensemble de variantes possibles, alors que l'ensemble du dispositif reste globalement inchangé, le capteur magnétique est remplacé par une technologie optique.

Les moyens de détection du blocage ou du glissement du moteur pas-à-pas consistent par conséquent en un dispositif optique générant ledit signal oscillant entre deux états.

Dans une première configuration, ledit dispositif optique comporte un capteur optique fonctionnant par réflexion de lumière sur l'élément tournant de l'actionneur, sur lequel des zones modifiant les propriétés du rayon réfléchi ont été délimitées de telle sorte que ledit rayon réfléchi change d'état au cours de la rotation.

Dans une seconde configuration, ce dispositif optique comporte un capteur optique fonctionnant par transmission de lumière à travers un élément tournant de l'actionneur, doté à cet effet d'au moins un orifice traversant permettant la transmission de lumière au cours de la rotation de l'élément tournant du moteur.

Comme précédemment, deux solutions préférentielles sont utilisées pour l'élément tournant, qui peut être le rotor ou un pignon du train d'engrenage du réducteur.

Enfin, pour toutes les configurations décrites, le circuit électronique de commande du moteur et le circuit électronique traitant le signal issu du capteur sont de préférence intégrés dans un unique composant.

De plus, les composants électroniques de l'actionneur, ainsi qu'un connecteur d'alimentation, sont implantés sur un circuit imprimé unique fixé dans le boîtier de l'actionneur.

Les nouveaux actionneurs objets de la présente invention concentrent donc des avantages appréciables à la fois dans l'optique de leur fabrication et dans celle du montage. Ces avantages sont également sensibles lors du fonctionnement habituel.

Cette invention va à présent être décrite plus en détail, notamment en référence aux figures jointes en annexe, pour lesquelles :
- la figure 1 représente une première version d'un actionneur selon l'invention, en vue de dessus ;
- la figure 2 en montre une variante dans laquelle le capteur est intégré au circuit électronique de commande du moteur ;
- la figure 3 est un diagramme temporel montrant une séquence de fonctionnement normal ;
- la figure 4 reprend la même séquence, mais lorsqu'un problème de blocage survient ;
- la figure 5 montre un chronogramme du fonctionnement simultané du compteur et de la détection ; et
- la figure 6 représente un schéma électrique simplifié de l'actionneur de l'invention.

Les références identifiant les mêmes composants sont identiques d'une figure à l'autre. Celles-ci présentent un exemple possible de réalisation de l'invention, sans qu'il soit possible d'y voir pour autant une limitation.

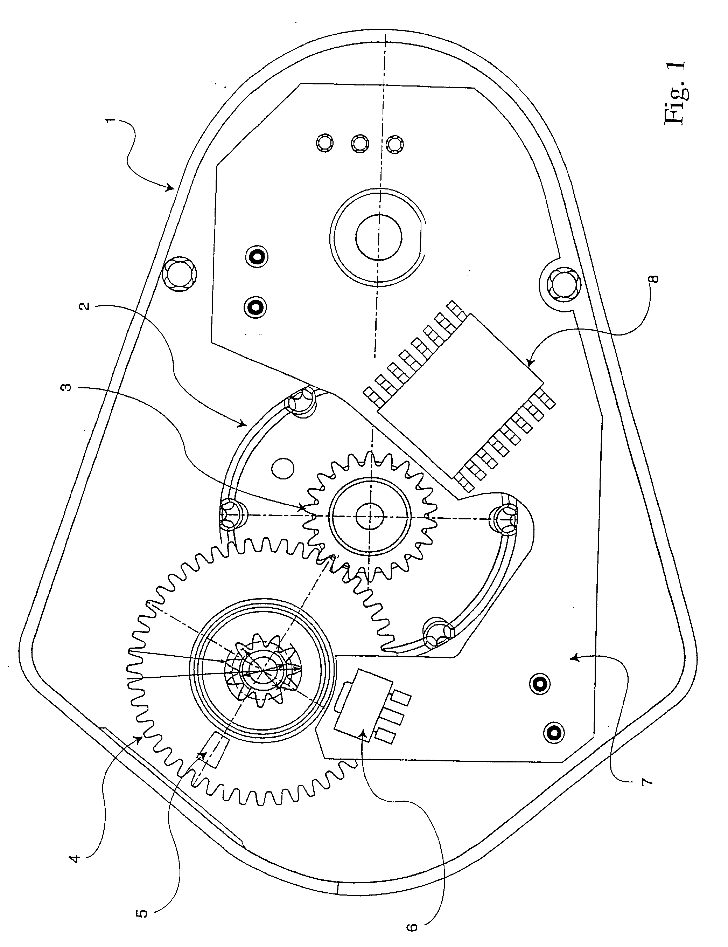

La figure 1 représente une vue de dessus de l'intérieur de l'actionneur (1), dans laquelle on distingue le rotor (2) du moteur pas-à-pas, le pignon de sortie (3) du rotor et le premier des pignons (4) du train d'engrenage. Ces éléments sont partiellement cachés par le circuit imprimé (7) qui apparaît au premier plan, réalisant notamment les connexions internes entre les composants.

Les moyens de détection proprement dits sont constitués d'un aimant permanent (5) disposé sur le pignon (4), et d'un capteur de champ magnétique (6) placé sur ledit circuit imprimé (7), de même que le circuit intégré de contrôle (8), unifiant en l'occurrence les circuits électroniques de traitement et de commande précités.

La configuration représentée permet le passage de l'aimant permanent (5) au niveau du capteur (6) à chaque tour effectué par le pignon (4) du train réducteur.

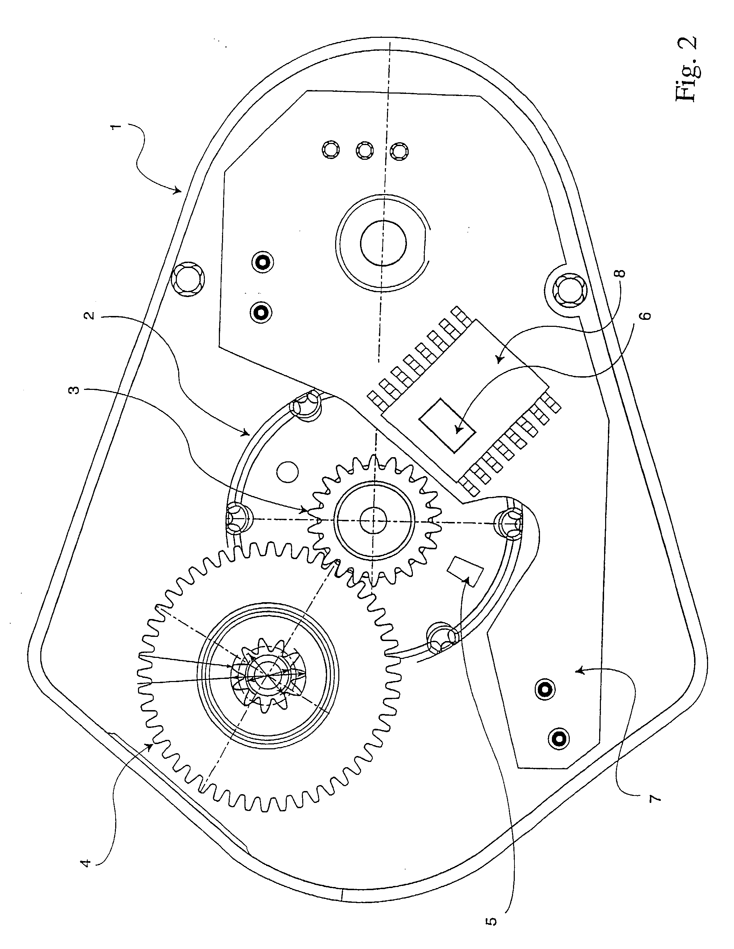

Une variante est présentée en figure 2, dans laquelle le capteur magnétique (6) est intégré dans le circuit de commande (8) du moteur pas-à-pas. L'aimant permanent (5) est dans ce cas intégré dans le rotor (2) dudit moteur, et passe au niveau du capteur (6) à chaque tour effectué par ce dernier.

Dans les versions à dispositif optique (non représentées), il suffit que le capteur optique soit en regard de l'élément tournant, de la même manière qu'auparavant, mais sans aucun obstacle sur le trajet du rayon optique. Lorsque le dispositif est à réflexion, la partie tournante peut comporter des zones sombres contrastant avec la couleur générale de la matière dans laquelle elle est réalisée.

Une source lumineuse, par exemple une diode électroluminescente infrarouge, éclaire ladite partie tournante, et chaque passage d'une partie sombre dans le champ d'émission de la source de lumière du capteur modifie la quantité de lumière réfléchie et reçue par le récepteur dudit capteur, et provoque par conséquent le changement d'état de la sortie du détecteur.

Dans le mode à fonctionnement par transmission, la partie tournante porte un ou plusieurs orifices, et le capteur optique, en forme de fourche classique, change d'état à chaque fois que le rayon optique lumineux est interrompu ou, à l'inverse, reconstitué.

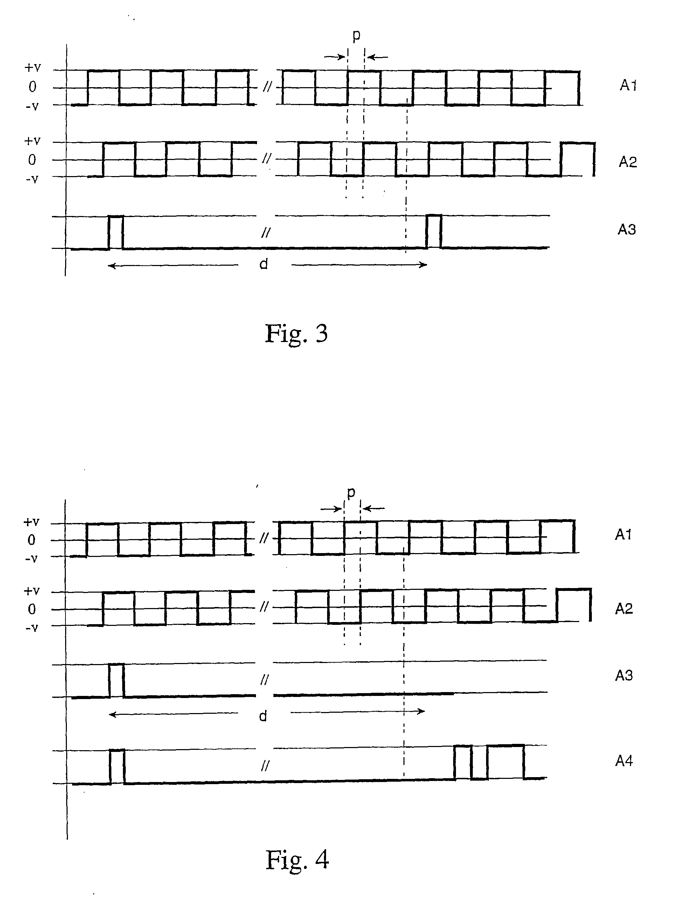

Les figures 3 et 4 illustrent ces signaux envoyés au moteur pas-à-pas, et reçu par le capteur (6), respectivement dans une phase de fonctionnement normale et dans une phase de dysfonctionnement.

Les signaux carrés réguliers apparaissant dans les diagrammes (A1) (A2) sont des signaux impulsionnels de commande des bobines du moteur pas-à-pas. Ils sont en quadrature de phase, et alternativement positifs (+ V) et négatifs (- V). La durée de chaque pas est notée p.

Le troisième diagramme (A3) concerne les signaux de changement d'état du capteur (6), par exemple lorsque l'aimant permanent (5) arrive au niveau dudit capteur (6). Ceci a lieu tous les N tours du rotor (2), N étant égal à l'unité lorsque ledit aimant est disposé sur le rotor (2) et représentant le rapport de réduction entre le rotor (2) du moteur et le pignon (4) du train d'engrenages dans lequel est placé l'aimant (5) lorsque cette dernière configuration est utilisée. Sur le schéma (A3), les signaux impulsionnels de changement d'état apparaissent à une périodicité d.

Dans le cas d'une solution magnétique, le capteur (6) utilisé peut être de type à effet HALL, de type magnétorésistif, ou plus généralement de tout type sensible à une variation du champ magnétique.

La durée d séparant deux signaux impulsionnels de changement d'état du capteur (6) en fonctionnement normal (figure 3) est connue, puisqu'elle représente un tour de l'élément tournant, soit un nombre de pas identifié à l'avance selon la configuration choisie. On peut donc savoir si un problème survient, par absence totale d'impulsions récurrentes en sortie du capteur (6), comme en (A3) dans la figure 4, ou parce que ladite impulsion normalement récurrente survient avec du retard par rapport à la prévision programmée dans le circuit de commande (8) comme en (A4).

Dans le premier cas, le moteur pas-à-pas est manifestement bloqué. Dans le second cas, il y a glissement ou perte de pas. La situation étant alors détectée, le circuit électronique (8) cesse d'une part d'envoyer des impulsions de commande au moteur pas-à-pas, et envoie d'autre part un signal de diagnostic à l'adresse de l'unité centrale de commande (non représentée).

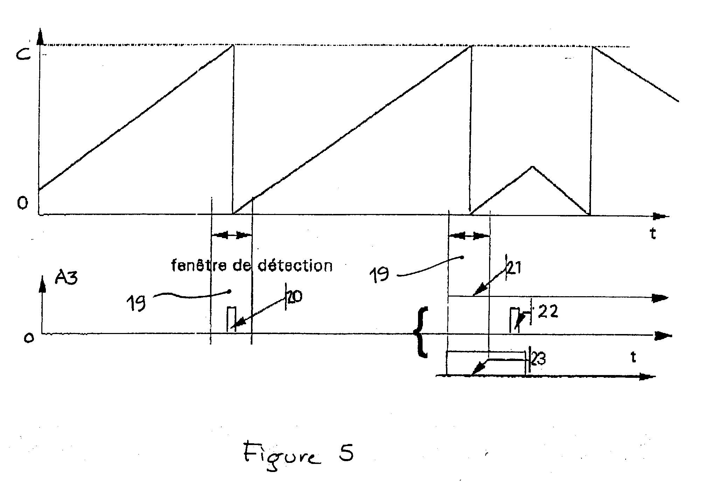

La figure 5 illustre plus clairement la détection du blocage à l'aide d'un registre compteur du circuit électronique, dans le bloc de gestion des pas et du signal (A3) de rotation en sortie du capteur (6).

Le signal (C) du compteur a une période qui correspond au nombre de pas nécessaire pour avoir une récurrence du signal (A3). Pour chaque cycle du compteur, il ne peut en principe, en fonctionnement normal, n'y avoir qu'une récurrence du signal (A3). Le compteur est incrémenté ou décrémenté suivant le sens de rotation du moteur.

Il y a une fenêtre de détection (19), correspondant à une détection tous les N ± ε pas. ε, qui vaut 2 à 3 pas, est nécessaire pour pallier les dispersions dues aux sensibilités différentes des capteurs de détection, ou aux aimantations des aimants, aux rapports non entiers des pignons, etc...

Quatre cas sont possibles :
Cas 20 : Récurrence du signal (A3) dans la fenêtre de détection, le diagnostic est que l'actionneur est en rotation normale, sans blocage ou glissement.
Cas 21 : Absence de récurrence dans la fenêtre de détection. L'actionneur est diagnostiqué bloqué.
Cas 22 : Récurrence hors de la fenêtre de détection. L'actionneur est diagnostiqué bloqué ou ayant subi une modification de sa position par une action extérieure.
Cas 23 : Prolongation ou multiple récurrence dans la fenêtre de détection. L'actionneur est diagnostiqué bloqué.

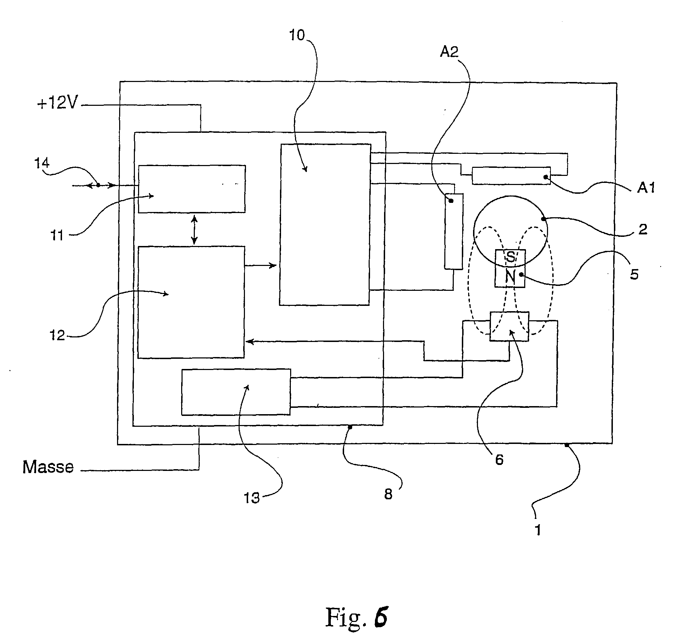

La figure 6 montre un schéma explicatif de l'ensemble du dispositif : le rotor (2), muni de son aimant permanent (5), le capteur (6) et les bobines (A1, A2) du stator sont représentés de manière simplifiée.

La partie électrique (8) proprement dite de l'actionneur (1), alimentée en +12 V continu via la batterie du véhicule, comporte un bloc de commande (10) du moteur, une alimentation (13) du capteur (6), un bloc de séquencement des pas et de gestion du signal de rotation (12), et un bloc de gestion de la communication (11). Ce dernier est connecté à un bus (14) multiplexé, relié à l'unité centrale de commande (non représentée).

La description qui précède n'est bien entendu qu'illustrative de l'invention, qui recouvre les variantes entrant dans le domaine de protection délimité par les revendications annexées.

## Revendications

1. Actionneur rotatif (1) à moteur pas-à-pas à détection de blocage, relié à une unité centrale de commande lui envoyant des consignes de positionnement, comportant un circuit électronique (8) permettant d'une part la commande des pas du moteur et d'autre part la communication avec ladite unité centrale, caractérisé en ce qu'il comprend des moyens de détection (5, 6) du blocage ou du glissement dudit moteur pas-à-pas, reliés à un circuit électronique de traitement comprenant d'une part un bloc électronique (12) de séquencement des pas du moteur et de gestion du signal de rotation issu desdits moyens de détection (5, 6), pour arrêter la rotation du moteur lorsqu'un problème est détecté, et d'autre part un circuit électronique (11) de gestion de la communication envoyant un signal de diagnostic à l'unité centrale de commande.

2. Actionneur rotatif (1) à moteur pas-à-pas selon la revendication 1, caractérisé en ce que lesdits moyens de détection du blocage ou du glissement du moteur pas-à-pas génèrent un signal (A3) oscillant entre deux états tant que ledit moteur tourne, ledit signal (A3) étant transmis au bloc électronique (12) de séquencement et de gestion du signal de rotation, comportant un compteur périodique dont la période est égale à la fréquence de récurrence normale dudit signal (A3), et détectant l'occurrence de cette donnée et le changement de période du compteur pour contrôler si la rotation du moteur est normale.

3. Actionneur rotatif (1) à moteur pas-à-pas selon la revendication précédente, caractérisé en ce que les moyens pour générer un signal (A3) oscillant entre deux états consistent d'une part en un aimant (5) permanent porté par un élément tournant (2, 4) de l'actionneur (1) et d'autre part en un capteur de champ magnétique (6), positionné sur une partie fixe de l'actionneur (1), de telle sorte que la variation du champ magnétique produit par le mouvement de l'aimant (5) induit un changement d'état du signal de sortie.

4. Actionneur rotatif (1) à moteur pas-à-pas selon la revendication précédente, caractérisé en ce que l'élément tournant de l'actionneur (1) portant l'aimant permanent (5) est le rotor (2) du moteur pas-à-pas.

5. Actionneur rotatif (1) à moteur pas-à-pas selon la revendication 3, caractérisé en ce que l'élément tournant de l'actionneur (1) portant l'aimant permanent (5) est un pignon (4) d'un train d'engrenage formant réducteur mécanique sur l'arbre du moteur pas-à-pas.

6. Actionneur rotatif (1) à moteur pas-à-pas selon l'une des revendications 3 à 5, caractérisé en ce que le circuit électronique de traitement et le capteur magnétique (6) sont intégrés dans un seul composant.

7. Actionneur rotatif (1) à moteur pas-à-pas selon la revendication 2, caractérisé en ce que les moyens de détection (5, 6) du blocage ou du glissement du moteur pas-à-pas consistent en un dispositif optique générant ledit signal (A3) oscillant entre deux états.

8. Actionneur rotatif (1) à moteur pas-à-pas selon la revendication précédente, caractérisé en ce que ledit dispositif optique comporte un capteur optique fonctionnant par réflexion de lumière sur l'élément tournant (2, 4) de l'actionneur (1), sur lequel des zones modifiant les propriétés du rayon réfléchi ont été délimitées de telle sorte que ledit rayon change d'état au cours de la rotation.

9. Actionneur rotatif (1) à moteur pas-à-pas selon la revendication 7, caractérisé en ce que ledit dispositif optique comporte un capteur optique fonctionnant par transmission de lumière à travers un élément tournant (2, 4) de l'actionneur (1), doté à cet effet d'au moins un orifice traversant permettant la transmission de lumière au cours de la rotation de l'élément tournant du moteur.

10. Actionneur rotatif (1) à moteur pas-à-pas selon l'une des revendications 8 et 9, caractérisé en ce que l'élément tournant coopérant avec le capteur optique est le rotor (2) du moteur pas-à-pas.

11. Actionneur rotatif (1) à moteur pas-à-pas selon l'une des revendications 8 et 9, caractérisé en ce que l'élément tournant coopérant avec le capteur optique est un pignon (4) du train d'engrenage du réducteur disposé sur l'arbre du moteur pas-à-pas.

12. Actionneur rotatif (1) à moteur pas-à-pas selon l'une des revendications 3 à 11, caractérisé en ce que le circuit électronique de commande du moteur (10) et le circuit électronique (12) traitant le signal issu du capteur sont intégrés dans un unique composant (8).

13. Actionneur rotatif (1) à moteur pas-à-pas selon l'une quelconque des revendications précédentes, caractérisé en ce que les composants électroniques (10, 11, 12, 13) de l'actionneur (1), ainsi qu'un connecteur d'alimentation, sont implantés sur un circuit imprimé (7) unique fixé dans le boîtier de l'actionneur (1).
